# EUROPEAN PATENT SPECIFICATION

(11) **EP 3 415 789 B1**
(45) Date of publication and mention of the grant of the patent: **02.10.2019**
(21) Application number: 17176055.6
(22) Date of filing: 14.06.2017
(51) Int. Cl.: F16F 15/32, G01M 1/32

(54) **DISPENSER FOR WHEEL BALANCING WEIGHTS**
SPENDER ZUM RADAUSWUCHTUNGSGEWICHTEN
DISTRIBUTEUR DE POIDS D'ÉQUILIBRAGE DE ROUE

(43) Date of publication of application: 19.12.2018
(73) Proprietor: WEGMANN automotive GmbH, 97209 Veitshöchheim (DE)
(72) Inventor: Pröstler, Mirko, 97267 Himmelstadt (DE)
(74) Representative: Lohr, Jöstingmeier & Partner

(56) References cited:
- EP-A1- 1 318 326
- EP-A1- 3 040 578
- EP-A2- 1 128 176
- EP-A2- 1 477 703
- DE-A1-102009 015 673

## Description

### Field of the invention

The invention relates to an automatic dispenser for balancing weights, preferably self- adhesive balancing weights. Such balancing weights may be used for balancing wheels of vehicles.

### Description of the related art

For balancing vehicle wheels, balancing weights are used. Self-adhesive balancing weights comprise segments of a mass material which may be a metal, like zinc or steel, having a self-adhesive tape at one side, by which the mass material may be held to a rim of a wheel. Multiple pieces or segments of such a mass material are held together by a strip of adhesive tape, forming a chain or a belt of balancing weights. The self-adhesive tape is protected by a liner, also called backing at the side opposite to the balancing weight segments. Before applying a balancing weight to a rim, the liner is removed.

US 3,960,409 shows such a belt of balancing weights which may have a significant length and which may be wound up to a coil to simplify storage.

EP 1 253 414 A2 discloses a complex dispensing device for balancing weights. Here, the liner is removed from the self-adhesive tape, then sections of balancing weight are cut from the tape and directly fed to an applicator. This device is intended for automatic tire balancing systems.

EP 1 128 176 A2 discloses a balancing weight having a plurality of weight elements being fully enclosed by a strip-like surface layer. The surface layer has partial cuts between adjacent weight elements which extend from opposite lateral edges thereof in order to ease separation of a weight segment comprising one or more weight elements.

EP 3 040 578 A1 discloses a dispenser for balancing weights with a transport section for transporting a belt of balancing weights segments and a cutting section for separating the belt of balancing weight segments into individual balancing weights.

In tire workshops, the mass required for balancing a wheel is determined by a balancing machine, and a corresponding number of balancing weight segments is manually cut off from a belt of balancing weights. Then the liner is removed and the balancing weight is applied to a rim. Manually counting the number of required balancing weight segments and cutting them off is time-consuming and prone to errors. To allow for manual handling, the balancing weight segments must have a minimum size which may be 10 or 5 grams. Lower masses would be difficult to handle, due to small size of the weight segments. This leads to a limited weight resolution and therefore to a limited balancing precision.

EP 3 040 578 discloses an automatic dispenser for balancing weights. A belt of balancing weight segments on a self-adhesive tape is moved by a driving belt to a cutting edge. After a selected number of balancing weight segments have passed the edge, a counter holder is pressed on the edge to form a 90 degree angle between two balancing weight segments. Then, a cutting knife is moved through the edge and under the counter holder to cut the tape and to separate the selected number of balancing weight segments from the belt.

In automated systems a robot places the balancing weights to the rim. This robot can precisely determine the position of the balancing weights at the rim. When balancing weights are applied manually, the person applying the balancing weight must estimate the correct position of the balancing weight, as the balancing machine normally only indicates the center of the balancing weight. If the center of the balancing weight does not fit to the indicated center position, there is a misbalancing of the wheel.

### Summary of the invention

The problem to be solved by the invention is to provide a balancing weight, a dispenser for balancing weights and a method for marking of balancing weights which allow precise positioning of a self-adhesive balancing weight at a wheel. Solutions of the problem are described in the independent claims. The dependent claims relate to further improvements of the invention.

In a preferred embodiment, a dispenser for balancing weights comprises a transport section and a cutting section. The dispenser uses a belt of balancing weights comprising of a plurality of balancing weight segments which are held together by a self-adhesive tape which may further be backed by a liner.

The transport section is for transporting the belt of balancing weights to provide a desired amount or number of balancing weight segments which are cut off the belt by the cutting section. The cutting section comprises at least on knife or cutter which is moved in a direction at right angle to the length of the belt of balancing weights. The knife is moved between adjacent balancing weight segments to cut the self-adhesive tape for separating the balancing weight segments. Preferably, further tape layers, like the liner are cut at the same time.

The dispenser provides a centering mark at the balancing weight sections by making a partial cut in the self-adhesive tape and/or liner at the center or close to the center of the balancing weight section. The position of the partial cut is the gap between adjacent balancing weights closest to the center of the balancing weight section. The center of such a section is between adjacent weight segments, if there is an even number of weight segments. In the case of an odd number, the closest position to the center between two adjacent weight segments is selected. Alternatively, there may be two partial cuts at both sides of the center segment. In general, there may be 2 or more partial cuts indicating a center or a positioning range. The depth of the partial cut is selected such, that it is clearly visible, but the segments should not separate from each other. Preferably, the depth of the partial cut is between 10% and 80%, more preferably between 20% and 50% of the width of the self-adhesive tape. The section may be bent to better identify the partial cut.

There may be cases, in which there are multiple cuts in the self-adhesive tape, for example to simplify bending. In such cases, the partial cut might still be clearly identifiable, for instance by having a larger depth than the other cuts. Furthermore, the partial cut might have a different width. It might be also narrower than the other cuts. However, the invention does not relate to balancing weights having self-adhesive tapes with multiple cuts.

Another embodiment relates to a method of dispensing balancing weights by cutting balancing weight sections from a belt of balancing weights and providing a centering mark by a partial cut as described above.

A further embodiment relates to a balancing weight or balancing weight section having a partial cut as described above.

The transport section may comprise at least one transport roller or belt for moving the belt by friction. To increase friction, there may be a counter roller or a counter belt for pressing the belt of balancing weights against the transport roller. A counter belt may be held and/or driven by a first pulley and a second pulley.

To further increase friction, it is preferred, if the transport roller or belt has a plurality of teeth preferably at its outer circumferential surface. Preferably these teeth have a diameter and a length, such that they intrude through the liner into the adhesive tape. Most preferably, the teeth do not touch and/or damage the balancing weight segments. Experiments have shown, that this may generate enough friction to precisely pull upwards a long belt from a stock being at a significantly lower level than the drive section. The mass of balancing weights which have to be lifted from the stock may be of several kilograms. The teeth always allow a precise transport even with minimal slipping back of the belt. A precise transport is desired for quick and precise cutting at the cutting section as the cutting knife has to precisely fit into the gap between neighboring weight segments. Another advantage of the teeth is the perforation of the liner with small holes reducing adhesion of the liner which significantly simplifies removal of the liner before applying the balancing weight to a rim.

To improve the contact of the belt of balancing weights with the transport roller or belt, and therefore to provide a good friction for transporting the belt of balancing weights, it is preferred, if the counter belt and/or the counter roller is pressed against the transport roller, which preferably may be done by a tensioner at the belt or at one or both of the pulleys.

It is further preferred to press the belt of balancing weights against the second transport roller by at least a second counter roller, which may be spring-loaded.

Preferably, the transport roller is driven by a motor, most preferably by a stepper motor. There may be a gear between the motor and the roller. A worm gear may be preferred, as this may block the belt from moving backwards due to the weight of the balancing weights between the stock and the drive section, when there is no power at the motor.

Preferably, the belt of balancing weight segments comprises a plurality of balancing weight segments which are held together by an adhesive tape for attaching the balancing weight segments to a rim of a wheel. A plurality of balancing weight segments may also be held together by an additional carrier like a plastic or metal tape or rod. The weight segments preferably comprise a mass material which may be a metal like zinc, lead, steel, tungsten, aluminum, tin or any other suitable material which may be a plastic material or any combination thereof.

It is further preferred if there is a backing or liner to protect the adhesive surface of the adhesive tape opposing to the balancing weights.

It is further preferred, if the adhesive tape has at least one strengthening layer to increase the shear strength of the belt to simplify transport by the transport section.

Preferably, the belt of balancing weights is wound to a coil which supplies the transport section.

It is preferred, if the transport section pulls the balancing weights at the belt of balancing weights from a stock which may be a coil of balancing weights, and it pushes the balancing weights into the cutting section. It is preferred to have at least one slideway which may be part of the cutting section on which the balancing weights may slide horizontally.

It is further preferred, if the transport section forms an angle, which preferably is in the range between 70 and 110 degrees, and most preferably is a 90 degrees angle. It preferably receives balancing weights in a vertical direction, further redirecting the balancing weights to a horizontal direction. This may be done by curving the belt of balancing weights at least partially around a transport roller. Although the horizontal and vertical directions disclosed herein are preferred, the embodiments may be arranged in any other way.

For transporting a desired number of balancing weight segments, either the length of transported belt may be measured, or the number of balancing weight segments may be counted. Both methods may be used together to get an additional reference and to increase reliability. For determining the length of transported balancing weight belt, it is preferred to have a slot wheel having a plurality of slots which may be detected and/or counted by means of a photo sensor. The slot wheel preferably is connected to the transport roller, but may also be connected to any other roller or belt. Instead of a slot wheel, there may be any other means for detecting rotation, like a resolver or angle encoder. There may also be a drive motor driving at least one of the wheels, most preferably the second transport roller, which preferably has an angle encoder or which may be a stepper motor. In the case of a stepper motor, the number of steps is a measure of the transported length of balancing weights.

Alternatively or additionally, there may be at least one means for counting the number of balancing weight segments. This may be done by detecting the gaps between the balancing weight segments, for example by means of a photo sensor or any optical sensor. To increase the width of the gap, it is preferred to bend the belt of balancing weights. It is preferred to bend the belt of balancing weights around the transport roller, counting the balancing weights passing said first counter roller.

It is preferred, if the cutting section comprises a belt guide, against which the belt of balancing weights is pushed by the transport section. The belt guide is preferably arc shaped and forms a curve to bend the belt of balancing weights in a direction, such that the gap between neighboring balancing weight segments increases and a cutter can pass between said neighboring segments to cut the belt into sections, preferably by cutting the adhesive tape and/or liner. The belt guide performs a continuous forming of the belt which is much quicker and less time-consuming than moving a counter holder on the belt to form the belt. Due to the continuous movement of the belt at the belt guide and lack of any pressing force to the belt, the probability of damaging like scratching the surface of balancing weight segments is much smaller.

Preferably, the belt guide is arc shaped. It may have an inner contour of an arc segment which may guide the balancing weight segments. The radius of the arc segment may be in a range between 2 times and 20 times, preferably, between 5 and 10 times the thickness and/or length of a balancing weight segment. The angle of the arc segment preferably is in a range between 30° and 150°, most preferably 90°. Preferably, the arc is shaped such, that the belt transported in a horizontal plane is deflected downwards. Here, bending of the belt is supported by gravity.

The cutter preferably should easily pass between neighboring balancing weights to be separated. This allows to use less cutting force and avoids damage of the surface of the balancing weight segments. The cut sides of the balancing weight segments are outer sides which are later visible when applied to a wheel. Therefore, there should not be any scratches or other markings.

Preferably, the cutter has a knife guide holding a knife and being configured to move from one side of the belt of balancing weights to the other side. The knife may be guided between two balancing weight sections. Preferably, the knife is only able to cut the adhesive tape (including backing or liner) connecting the balancing weight sections. It is not designed for cutting the material of balancing weight sections, which may be steel or aluminum, or any other metal.

To avoid a blockage of the dispenser and/or damaging of the knife, it is preferred to have a position sensor for detecting gaps between neighbor balancing weights. Preferably, the position sensor is over or near the position of the knife and/or the cutting path of the knife, such it may detect the gap which is used by the knife for cutting. The position sensor may also be at least one balancing weight width distant from the knife position. If it is too far away, there may be changing distances between the detected position and an open gap due to mechanical tolerances and or stretching of the belt. The position sensor preferably is an optical sensor, but may be a magnetic sensor, an inductive sensor or any other sensor suitable for detecting a balancing weight segment and/or a gap between balancing weight segments.

For dispensing certain mass of balancing weights, first the required number of balancing weight segments may be calculated, unless this is already known. Further, the motor may be operated for certain time, for certain number of steps in the case of a stepper motor to push the required number of balancing weight segments towards the belt guide. Preferably, the motion of the motor is stopped, if after the required number of balancing weight segments have passed and the position sensor has detected a gap. When, preferably the knife is operated to move through the gap and to separate the required number of balancing weight segments from the belt.

Bending the belt by the belt guide further reduces stress to the adhesive tape. If the balancing weight segments would simply be pushed apart to produce a gap between two balancing weight segments, the comparatively flexible self-adhesive tape or foam would expand in length, while the less flexible backing or liner would tear or at least separate from the tape. This is prevented by the bending as disclosed above. For manually handling the cut balancing weight segments it is essential, that the liner remains in place. Otherwise, the cut segments would immediately stick to a tray into which the dispenser delivers the cut segments.

After a certain number of balancing weight segments have been cut by the cutter, they may slide and/or fall driven by gravity along the preferably vertical side of the cutter base and fall into a tray, from which they may be taken out and attached to a rim of a wheel.

The cutting section and the transport section preferably are used together as described herein. Alternatively, it is preferred to use the cutting section without or with a different transport section. For example, the transport section may be simplified and use only a first transport roller and a first counter roller to generate the required friction to the belt of balancing weights.

The embodiments described herein allow for automatic cutting of required mass sections form a belt of balancing weights. Due to the automatic transport and cutting a high speed can be achieved and a large number of balancing weight can be processed in a short time interval. Furthermore standard size segments of balancing weights as well as smaller and even significantly smaller segments can be processed. This may result in a much better balancing mass resolution compared to manual processing. Conventional balancing weight segments often are designed to have a size which can easily be handled. Therefore, lightweight segments may be comparatively thin, resulting in a larger surface, which can better be gripped or they may be made of a low density material resulting in a larger size. By the embodiments, the balancing weight segments may have very small sizes as there is no need to increase size for manual handling of every segment.

Due to the automated cutting, a more stable and robust adhesive tape may be used. It may even have a robust support layer included. While it may be impossible to make a manual clean cut for separating segments, the automated cutting with a guided knife and the balancing weights held in a predetermined position at the cutter edge will result in a precise cut. Furthermore, the size of the balancing weight segments may be reduced to sizes like 5g, 2g, 1g or less. This increases resolution and therefore balancing precision. Such small sizes can only be handled by an automated dispenser as they are too small for manual handling.

A further embodiment relates to a method for delivery of cut sections of balancing weights. The method comprises the steps of transporting a certain number of balancing weight segments being part of a belt of balancing weights to a belt guide, bending the balancing weights extending such that a gap opens between two adjacent balancing weight segments and moving a knife from one side of the belt of the balancing weights to the other side of the belt of balancing weights, and therefore cutting a section of cut balancing weights from the belt of balancing weights.

### Description of Drawings

In the following the invention will be described by way of example, without limitation of the general inventive concept, on examples of embodiment with reference to the drawings.
Figure 1 shows a preferred embodiment of a balancing weight.
Figure 2 shows an embodiment of a modified balancing weight.
Figure 3 shows a preferred embodiment of a dispenser.
Figure 4 shows an alternate embodiment of a dispenser.
Figure 5 shows a transport roller in detail.
Figure 6 shows a sectional view of the slideway.
Figure 7 shows the operation of the cutter.
Figure 8 shows the cutter in an idle state.

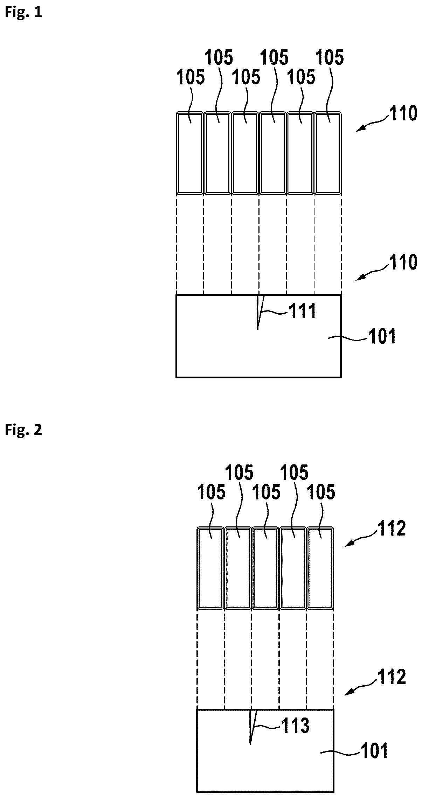

Figure 1 shows a first embodiment of a balancing weight 110 having an even number of weight segments 105. The upper portion of the figure shows the balancing weight in a top view, while the lower portion shows the balancing weight in a bottom view, such that the adhesive tape can be seen. The dashed lines between the upper and lower portions indicate the positions of the segments. A partial cut 111 is at the center of the balancing weight between the adjacent segments closest to the center (the third weight from any side). This partial cut identifies the center of the balancing weight. Here only a small balancing weight is shown to demonstrate the basic concept. It is obvious, that the center indication is more useful at larger (longer) balancing weights.

Figure 2 shows another embodiment with a balancing weight 112 having an odd number of weight segments 105. A partial cut 113 is at a position close to the center of the balancing weight between the adjacent segments closest to the center. The cut is in this embodiment between the second and the third segment from the left.

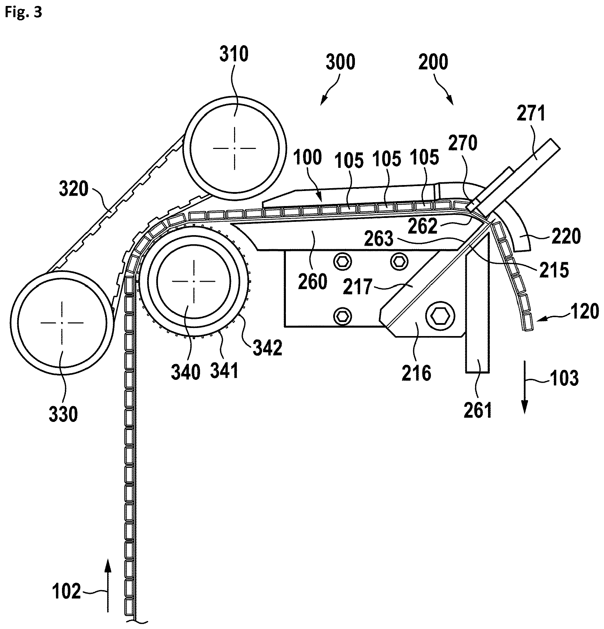

In Figure 3, a preferred embodiment of a dispenser is shown in a side view. The dispenser comprises a transport section 300 and a cutting section 200. A belt of balancing weights 100 is fed by a drive mechanism to a cutter, where desired portions of mass material are cut from the belt. In this embodiment, a belt of balancing weights 100 comprising of a plurality of individual balancing weight segments 105, is fed at the left side in feeding direction 102 into the transport section of the dispenser. There may be a coil (not shown) for supplying the balancing weights. Preferably, a transport roller 340 is provided for transporting the belt having balancing weight segments, which preferably are coming from an approximately vertical direction preferably into an approximately horizontal direction, for easier cutting. A counter belt 320, which preferably is suspended between a first pulley 310 and a second pulley 330, preferably presses the belt of balancing weights 100 against the transport roller 340, and therefore generates friction to the belt of balancing weights. Friction may further be increased by teeth 341, 342 at the transport roller. It is preferred, if at least the transport roller 340 is driven by a motor (not shown). To determine the precise amount of balancing weight mass material, which has been transported, an angle encoder or counter may be provided.

After passing the transport roller, the balancing weights are pushed in an approximately horizontal direction, and are guided by a slideway 260. The slideway 260 has an end section 263 and preferably a curved section 262 close before the end section 263. Cutting is preferably done by a knife 215 which passes close to the end section 263. Preferably, the knife is held by a knife holder 216 and may be locked to the knife holder by a counter holder 217.

Before cutting, the belt section of balancing weights 120 to be cut off of the belt is bent to an angle of 90° or less by pushing the belt against a curved belt guide 220. Bending may further be supported by the curved section 262 of the slideway 260.

The balancing weights of the curved belt form a gap between adjacent balancing weights which allows the knife 215 to slide between two adjacent balancing weights. After forming the angle, the cutter comprising a knife 215 is moved from one side to the other side through the belt of balancing weights, cutting the adhesive tape between two balancing weight segments, without cutting the balancing weight segments themselves, and therefore separating a section of cut balancing weights 120 from the belt of balancing weights 100.

To transport and/or position the belt, such that the knife exactly passes through a gap between adjacent balancing weights, it is preferred to provide a position sensor 270 which may be held by a sensor holder 271. Preferably, the sensor is arranged such, that it detects the gap to be used by the knife or a neighbored gap. The sensor may be an optical or magnetic sensor.

After cutting, a section of cut balancing weights 120 slides or falls down along sidewall 261 in a direction as indicated by arrow 103, and may be delivered to a tray from which either a robot or a person may take out the balancing weight for applying it to a wheel.

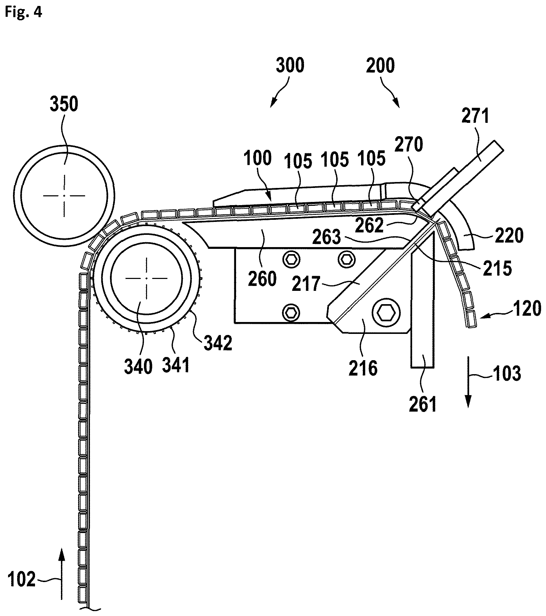

Figure 4 shows an alternate embodiment, similar to the embodiment above. Here, instead of the counter belt a counter roller 350 is provided.

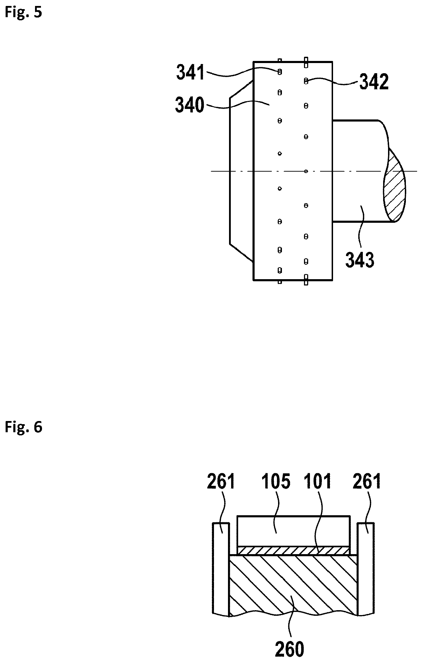

Figure 5 shows a transport roller in detail. The transport roller 340 preferably is driven via a driveshaft 343 by a motor (not shown) and via an optional gearbox (not shown). Preferably, the transport roller is cylindrically shaped. Most preferably, it has a plurality of teeth 341, 342 or spikes at its outer circumference. These teeth penetrate into the adhesive tape of the belt of balancing weights and improve friction for precise transport of the belt. Preferably, there are multiple rows of teeth which may be displaced against each other.

Figure 6 shows a sectional view of the slideway. The slideway 260 may have at least one sidewall 261 to prevent the belt from sliding of the slideway. At the top of the slideway a belt of balancing weights comprising multiple balancing weight segments 105 on an adhesive tape 101 may be pushed forward by the transport roller 340.

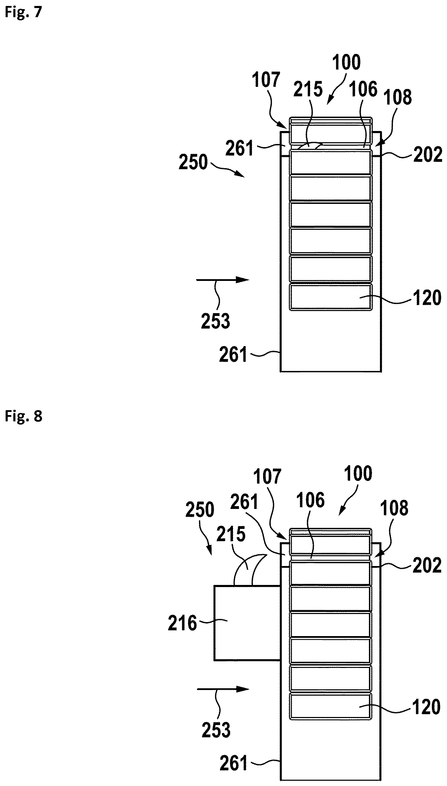

In Figure 7, the operation of the cutter 250 comprising a knife holder 216 with attached knife 215 is shown. This image is a sectional view from right side of Figure 1 to the cutter, where the counter holder has been omitted. Due to bending the belt of balancing weights, a gap 106 forms at the cutter edge 202, through which a knife 215, which is attached to a knife holder 216, is moved in direction 253 from a first side 107 of the belt of balancing weights to the second side 108 to separate the section of cut balancing weights 120 from the belt of balancing weights 100.

In Figure 8, the cutter 250 is shown in an idle state, where the knife 215 is outside of the belt of balancing weights.

### List of reference numerals

- 100: belt of balancing weights
- 101: adhesive tape
- 102: balancing weight feeding direction
- 103: balancing weight delivery direction
- 105: balancing weight segment
- 106: gap between balancing weight segments
- 107: first side
- 108: second side
- 110: balancing weight with even number of segments
- 111: partial cut
- 112: balancing weight with odd number of segments
- 113: partial cut
- 120: cut balancing weights
- 200: cutting section
- 215: knife
- 216: knife holder
- 217: knife counter holder
- 220: belt guide
- 250: cutter
- 253: cutter movement
- 260: slideway
- 261: sidewall
- 262: curved section
- 263: end section
- 270: position sensor
- 271: sensor holder
- 300: transport section
- 310: first pulley
- 320: counter belt
- 330: second pulley
- 340: transport roller
- 350: counter roller
- 341: first teeth
- 342: second teeth

## Claims

1. Balancing weight for vehicle wheels comprising a plurality of weight segments (105) held by a self-adhesive tape, wherein self-adhesive tapes having multiple cuts are excluded,
**characterized in, that**
the self-adhesive tape has a centering mark comprising a partial cut between adjacent weight segments at a position closest to the center of the balancing weight.

2. Balancing weight according to claim 1,
**characterized in, that**
the depth of the partial cut is between 10% and 80% and preferably between 20% and 50% of the width of the self-adhesive tape.

3. Balancing weight according to claim 1 or 2,
**characterized in, that**
the weight segments (105) comprise a metal like zinc, lead, tungsten, aluminum, tin, steel and/or a plastic material.

4. Dispenser for balancing weights according to any one of the previous claims, the dispenser comprising a transport section (300) and a cutting section (200), wherein
the transport section comprises a transport roller (340) having a plurality of teeth (341, 342) at its circumferential outer surface designed for generating friction to a belt of balancing weights (100) comprising a plurality of individual balancing weight segments (105), for transporting the belt of balancing weights (100) to the cutting section,
the cutting section further having a knife (215) movable from a first side (107) of the belt of balancing weights to a second side (108), to separate the belt of balancing weights and being configured to provide a partial cut between two individual balancing weight segments (105) at a gap between adjacent balancing weights.

5. Dispenser for balancing weights according to claim 4,
**characterized in that**
the cutting section has an arc shaped belt guide (220) for forming the belt of balancing weights to a curve thus opening at least one gap between neighboring balancing weight segments.

6. Dispenser for balancing weights according to claim 4 or 5
**characterized in that**
a counter roller (350) and/or a counter belt (320) is provided to press the belt against the transport roller (340) for increasing friction.

7. Dispenser for balancing weights according to any one of the claims 4 to 6,
**characterized in that**
a sensor (270) is provided for detecting gaps between individual balancing weights.

8. Dispenser for balancing weights according to claim 7,
**characterized in that**,
the sensor (270) is mounted at a location at the cutting path of the knife (215).

9. Dispenser for balancing weights according to claim 7 or 8,
**characterized in that**,
the signal of the sensor (270) is used for counting the number of balancing weights.

10. Method for delivering balancing weights according to any one of the claims 1 to 3, comprising a desired number of balancing weight segments (105) by transporting a desired number of balancing weight segments (105) being part of a belt of balancing weights to a belt guide (220),
moving a knife (215) between adjacent balancing weight segments from one side of the belt of balancing weights partially towards the other side of the belt of balancing weights, and providing a partial cut as a center mark of a balancing weight at a position closest to the center of the balancing weight, and
moving the knife (215) between adjacent balancing weight segments from one side of the belt of the balancing weights to the other side of the belt of balancing weights, and therefore cutting a section of cut balancing weights from the belt of balancing weights.

## Patentansprüche

1. Auswuchtgewicht für Fahrzeugräder umfassend eine Vielzahl von Gewichtssegmenten (105), die von einem selbstklebenden Band gehalten werden, wobei selbstklebende Bänder mit mehreren Einschnitten ausgeschlossen sind,
**dadurch gekennzeichnet, dass**
das selbstklebende Band eine Mittelmarkierung hat, die an einer Position, die der Mitte des Auswuchtgewichts am nächsten ist, einen Teilschnitt zwischen benachbarten Gewichtssegmenten umfasst.

2. Auswuchtgewicht nach Anspruch 1,
**dadurch gekennzeichnet, dass**
die Tiefe des Teilschnittes zwischen 10% und 80% und vorzugsweise zwischen 20% und 50% der Breite des selbstkleben Bandes liegt.

3. Auswuchtgewicht nach Anspruch 1 oder 2,
**dadurch gekennzeichnet, dass**
die Gewichtssegmente (105) ein Metall wie Zink, Blei, Wolfram, Aluminium, Zinn, Stahl und/oder ein Kunststoffmaterial umfassen.

4. Spender für Auswuchtgewichte nach einem der vorhergehenden Ansprüche, wobei der Spender einen Transportabschnitt (300) und einen Schneidabschnitt (200) umfasst, wobei
der Transportabschnitt eine Transportrolle (340) mit einer Vielzahl von Zähnen (341, 342) an seiner Umfangsaußenfläche umfasst, die zur Erzeugung von Reibung an einem Auswuchtgewichtegurt (100) umfassend eine Vielzahl von einzelnen Auswuchtgewichtssegmenten (105) ausgebildet sind, um den Auswuchtgewichtegurt (100) zum Schneidabschnitt zu transportieren,
wobei der Schneidabschnitt weiterhin ein Messer (215) hat, das von einer ersten Seite (107) des Auswuchtgewichtegurtes zu einer zweiten Seite (108) bewegbar ist, um den Auswuchtgewichtegurt zu durchtrennen, und konfiguriert ist, um einen Teilschnitt zwischen zwei einzelnen Auswuchtgewichtssegmenten (105) bei einem Spalt zwischen benachbarten Auswuchtgewichten vorzusehen.

5. Spender für Auswuchtgewichte nach Anspruch 4,
**dadurch gekennzeichnet, dass**
der Schneidabschnitt eine bogenförmige Gurtführung (220) hat, um den Auswuchtgewichtegurt zu einer Kurve zu formen, um somit mindestens einen Spalt zwischen benachbarten Auswuchtgewichtssegmenten zu öffnen.

6. Spender für Auswuchtgewichte nach Anspruch 4 oder 5,
**dadurch gekennzeichnet, dass**
eine Gegenrolle (350) und/oder ein Gegengurt (320) vorgesehen sind, um den Gurt zur Erhöhung der Reibung gegen die Transportrolle (340) zu drücken.

7. Spender für Auswuchtgewichte nach einem der Ansprüche 4 bis 6,
**dadurch gekennzeichnet, dass**
ein Sensor (270) zur Erkennung von Lücken zwischen einzelnen Auswuchtgewichten vorgesehen ist.

8. Spender für Auswuchtgewichte nach Anspruch 7,
**dadurch gekennzeichnet, dass**
der Sensor (270) an einer Stelle am Schneidweg des Messers (215) angebracht ist.

9. Spender für Auswuchtgewichte nach Anspruch 7 oder 8,
**dadurch gekennzeichnet, dass**
das Signal des Sensors (270) zum Zählen der Anzahl von Auswuchtgewichten verwendet wird.

10. Verfahren zum Zuführen von Auswuchtgewichten nach einem der Ansprüche 1 bis 3, umfassend eine gewünschte Anzahl von Auswuchtgewichtssegmenten (105) durch Transportieren einer gewünschten Anzahl von Auswuchtgewichtssegmenten (105), die Teil eines Auswuchtgewichtegurtes sind, zu einer Gurtführung (220),
Bewegen eines Messers (215) zwischen benachbarten Auswuchtgewichtssegmenten von einer Seite des Auswuchtgewichtegurtes teilweise zur anderen Seite des Auswuchtgewichtegurtes, und Vorsehen eines Teilschnittes als eine Mittelmarkierung eines Auswuchtgewichtes an einer Position, die der Mitte des Auswuchtgewichtes am nächsten liegt, und
Bewegen des Messers (215) zwischen benachbarten Auswuchtgewichtssegmenten von einer Seite des Auswuchtgewichtegurtes zur anderen Seite des Auswuchtgewichtegurtes, und dadurch Abschneiden eines Abschnitts von abgeschnittenen Auswuchtgewichten vom Auswuchtgewichtegurt.

## Revendications

1. Poids d'équilibrage pour roues de véhicule comprenant une pluralité de segments de poids (105) tenus par une bande auto-adhésive, dans lequel des bandes auto-adhésives ayant de multiples coupes sont exclues,
**caractérisé en ce que**
la bande auto-adhésive a un repère de centrage comprenant une coupe partielle entre des segments de poids adjacents à une position la plus proche du centre du poids d'équilibrage.

2. Poids d'équilibrage selon la revendication 1,
**caractérisé en ce que**
la profondeur de la coupe partielle est comprise entre 10 % et 80 % et de préférence entre 20 % et 50 % de la largeur de la bande auto-adhésive.

3. Poids d'équilibrage selon la revendication 1 ou 2,
**caractérisé en ce que**
les segments de poids (105) comprennent un métal comme le zinc, le plomb, le tungstène, l'aluminium, l'étain, l'acier et/ou une matière plastique.

4. Distributeur pour poids d'équilibrage selon l'une quelconque des revendications précédentes, le distributeur comprenant une section de transport (300) et une section de découpe (200), dans lequel
la section de transport comprend un rouleau de transport (340) comportant une pluralité de dents (341, 342) au niveau de sa surface externe circonférentielle conçue pour générer un frottement sur une courroie de poids d'équilibrage (100) comprenant une pluralité de segments de poids d'équilibrage individuels (105), en vue de transporter la courroie de poids d'équilibrage (100) vers la section de découpe,
la section de découpe comportant en outre une lame (215) mobile d'un premier côté (107) de la courroie de poids d'équilibrage à un second côté (108), pour séparer la courroie de poids d'équilibrage et étant configurée pour assurer une coupe partielle entre deux segments de poids d'équilibrage individuels (105) selon un écartement entre poids d'équilibrage adjacents.

5. Distributeur pour poids d'équilibrage selon la revendication 4,
**caractérisé en ce que**
la section de découpe comporte un guide-courroie en forme d'arc (220) destiné à former la courroie de poids d'équilibrage en une courbe ouvrant ainsi au moins un écartement entre des segments de poids d'équilibrage voisins.

6. Distributeur pour poids d'équilibrage selon la revendication 4 ou 5,
**caractérisé en ce que**
un contre-rouleau (350) et/ou une contre-courroie (320) est prévu(e) pour presser la courroie contre le rouleau de transport (340) pour augmenter le frottement.

7. Distributeur pour poids d'équilibrage selon l'une quelconque des revendications 4 à 6,
**caractérisé en ce que**
un capteur (270) est prévu pour détecter des écartements entre poids d'équilibrage individuels.

8. Distributeur pour poids d'équilibrage selon la revendication 7,
**caractérisé en ce que**,
le capteur (270) est monté à un emplacement au niveau du chemin de découpe de la lame (215).

9. Distributeur pour poids d'équilibrage selon la revendication 7 ou 8,
**caractérisé en ce que**,
le signal du capteur (270) est utilisé pour compter le nombre de poids d'équilibrage.

10. Procédé pour délivrer des poids d'équilibrage selon l'une quelconque des revendications 1 à 3, comprenant un nombre souhaité de segments de poids d'équilibrage (105) par transport d'un nombre souhaité de segments de poids d'équilibrage (105) qui font partie d'une courroie de poids d'équilibrage vers un guide-courroie (220),
déplacement d'une lame (215) entre des segments de poids d'équilibrage adjacents d'un côté de la courroie de poids d'équilibrage partiellement vers l'autre côté de la courroie de poids d'équilibrage, et fourniture d'une coupe partielle en tant que repère de centre d'un poids d'équilibrage à une position la plus près du centre du poids d'équilibrage, et
déplacement de la lame (215) entre des segments de poids d'équilibrage adjacents d'un côté de la courroie des poids d'équilibrage vers l'autre côté de la courroie des poids d'équilibrage, et ainsi découpe d'une section de poids d'équilibrage coupée à partir de la courroie de poids d'équilibrage.
